## Europäisches Patentamt

## European Patent Office

## Office européen des brevets

(11) Veröffentlichungsnummer: **0 026 257**
**B1**

(12) **EUROPÄISCHE PATENTSCHRIFT**

(45) Veröffentlichungstag der Patentschrift:
12.08.87

(21) Anmeldenummer: **80102725.1**

(22) Anmeldetag: **16.05.80**

(51) Int. Cl.⁴: **F 25 B 27/00**, F 24 J 3/00,
F 24 D 11/02 //
F25B15/06, F25B17/08

(54) **Absorptions-Wärmepumpeanlage.**

(30) Priorität: **28.09.79 DE 2939423**

(43) Veröffentlichungstag der Anmeldung:
**08.04.81 Patentblatt 81/14**

(45) Bekanntmachung des Hinweises auf die Patenterteilung:
**12.08.87 Patentblatt 87/33**

(84) Benannte Vertragsstaaten:
**AT BE CH DE FR GB IT LI NL SE**

(56) Entgegenhaltungen:
**DE-A-2 622 699**
**DE-A-2 631 320**
**DE-A-2 737 059**
**DE-A-2 801 895**
**DE-A-2 808 464**
**DE-A-3 012 308**
**DE-C-818 649**
**FR-A-2 377 589**
**GB-A-1 596 786**
**US-A-2 003 310**
**US-A-2 182 098**
**US-A-3 302 401**
**US-A-3 483 710**
**US-A-3 973 552**
**US-A-4 121 432**
**US-A-4 121 566**
**US-A-4 143 705**
**US-A-4 153 104**

(73) Patentinhaber: **Alefeld, Georg, Prof. Dr., Josef-Raps- Strasse 3, D-8000 München 40 (DE)**

(72) Erfinder: **Alefeld, Georg, Dr. Prof., Josef- Raps-Strasse 3, D-8000 München 40 (DE)**
Erfinder: **Maier- Laxhuber, Peter, Dipl.- Phys., Erwin- von- Steinbachweg 33, D-8000 München 45 (DE)**

(74) Vertreter: **von Bezold, Dieter, Dr., Patentanwälte Dr. D. von Bezold, Dipl.- Ing. P. Schütz, Dipl.-Ing. W. Heusler Maria- Theresia- Strasse 22 Postfach 86 02 60, D-8000 München 86 (DE)**

(56) Entgegenhaltungen: (Fortsetzung)

Buch **"SORPTIONS-KÄLTEMASCHINEN, von W. Niebergall, Springer-Verlag 1959, S. 240-241**
Buch **"KÄLTETECHNIK", Verlag G. Braun, S. 656**

**Beschreibung**

Die Erfindung betrifft eine Absorptionswärmepumpenanlage mit einer Austreiber-Absorber-Einheit, die Zeolith als Absorptionsmittel sowie ein in diesem absorbiertes Arbeitsmittel enthält und alternierend als Austreiber oder Absorber arbeitet, ferner mit einer Heizvorrichtung zum Zuführen von Wärmeenergie relativ hoher Temperatur zur Austreiber-Absorber-Einheit, einer mit der Austreiber-Absorber-Einheit gekoppelten Vorrichtung zur Wärmeentnahme, einer mit der Austreiber-Absorber-Einheit gekoppelten Kondensatoranordnung zum Kondensieren von dampfförmigem Arbeitsmittel, das durch die Wärmezufuhr mit einem Druck in einem vorgegebenen Druckbereich aus dem Absorptionsmittel ausgetrieben wurde, einer Vorrichtung zum Verringern des Druckes des kondensierten Arbeitsmittels und einem Verdampfer zum Verdampfen des kondensierten Arbeitsmittels verringerten Drucks.

Für eine möglichst wirtschaftliche Ausnutzung der verfügbaren fossilen und nuklearen Energievorräte der Erde hat die Wärmepumpe in jüngerer Zeit zusätzlich zu der seit langem üblichen Verwendung zur Kühlung auch für Heizzwecke erhebliche Bedeutung erlangt. Ein Problem, das bisher jedoch noch nicht zur vollen Zufriedenheit gelöst ist, besteht in der Versorgung einer Wärmepumpe mit Betriebsenergie. Kompressor-Wärmepumpen, die durch einen Elektromotor angetrieben werden, haben den Nachteil, daß sie das Stromnetz zusätzlich belasten und daß diese zusätzliche Belastung zumindest zum Teil mit den Spitzenlastzeiten des Stromnetzes zusammenfällt. Dies gilt sowohl für die Heizung als auch die Kühlung (generell "Klimatisierung") von Räumen. Diesen Nachteil kann man zwar dadurch vermeiden, daß man die Wärmepumpe während Zeiten niedriger Netzbelastung, insbesondere nachts, laufen läßt und die erzeugte Wärme oder Kälte in einem Wärme- bzw. Kältespeicher speichert, aus dem die Wärme oder Kälte dann bei Bedarf entnommen werden kann. Die von einer Wärmepumpe abgegebene Wärme fällt jedoch bei verhältnismäßig niedrigen Temperaturen an, so daß voluminöse Niedertemperatur-Wärmespeicher benötigt werden, um die erforderliche Wärmemenge speichern zu können, entsprechendes gilt im wesentlichen auch für die Speicherung von Kälte.

Absorptions-Wärmepumpen können durch einen Öl- oder Gasbrenner mit Betriebsenergie versorgt werden, wodurch sich einige der oben erwähnten Nachteile von Kompressor-Wärmepumpen vermeiden lassen. Absorptions-Wärmepumpen, die durch einen Gas- oder Ölbrenner mit Betriebsenergie versorgt werden, haben jedoch ebenfalls Nachteile: Eine wirtschaftliche Ausnutzung der Primärenergie erfordert eine Anpassung der Kälte- und/oder Wärmeausgangsleistung der Wärmepumpe an den jeweiligen Wärmebedarf, d.h. daß die Anlage regelbar sein muß. Eine stetige Regelung von Ölbrennern hat sich jedoch als schwierig erwiesen. Eine Zweipunktregelung hat andererseits keinen so guten Wirkungsgrad wie eine stetige Regelung und außerdem besteht in Zeiten relativ geringen Wärmebedarfs, in denen die Einschaltzeiten des Brenners verhältnismäßig kurz und durch längere Pausen getrennt sind, die Gefahr einer Kondensation von Verbrennungsprodukten im Kamin, also einer sogenannten Kaminversottung. Der Belastung eines Gasleitungsnetzes sind ebenfalls Grenzen gesetzt und im allgemeinen ist auch hier eine gleichmäßige Belastung ohne hohe Spitzen zu den Hauptverbrauchszeiten erwünscht. Außerdem treten bei abgeschalteter Öl- bzw. Gasheizung erhebliche Wärmeverluste infolge der unvermeidlichen Konvektion durch den Kamin auf. Eine Elektroheizung von Absorptions-Wärmepumpen hat hinsichtlich der Netzbelastung die gleichen Nachteile wie der Antrieb einer Kompressor-Wärmepumpe durch einen Elektromotor.

Aus der US-A-4 070 870 (Bahel et al) ist es ferner bekannt, mit Sonnenenergie Warmwasser zu erzeugen, das in einem Vorratsbehälter gespeichert und entweder bei Wärmebedarf unmittelbar zu Heizzwecken oder bei Kältebedarf nach zusätzlicher Erwärmung im Kondensator einer Kompressorwärmepumpe zum Heizen des Austreibers einer Absorptions-Kältemaschine verwendet wird. Die im Warmwasser gespeicherte Wärmeenergie kann wegen ihres niedrigen Temperaturniveaus jedoch nicht direkt zum Betrieb der Absorptionskältemaschine verwendet werden.

Aus der US-A-4 034 569 und der dieser teilweise entsprechenden DE-A-2 720 561 (Tschernev) ist eine auf dem Prinzip einer Absorptions-Kältemaschine arbeitende Kühlvorrichtung bekannt, die z. B. mit dem Arbeitsmittelsystem Zeolith/Wasser arbeitet und mit Sonnenenergie beheizt wird. Die Kälteleistung steht nur bei Sonneneinstrahlung zur Verfügung, die beim Kondensieren und Absorbieren freiwerdende Wärme wird nicht genutzt und kann praktisch auch nicht genutzt werden, da das Temperaturniveau beim Austreiben niedrig ist und praktisch 100°C nicht wesentlich übersteigen dürfte. Da der Austreiber während der Kälteerzeugung durch die Sonnenenergie geheizt wird, muß das bei der Kälteerzeugung verdampfte Arbeitsmittel vor der erneuten Absorption gespeichert werden. Es wird also lediglich Arbeitsmittel und nicht Betriebs- oder Nutzenergie gespeichert. Daß Zeolith Eigenschaften hat, die ihn als Absorptionsmittel für eine Anlage mit einer Absorptions-Wärmepumpe geeignet machen, bei der in vorteilhafter Weise sowohl Nutzwärme auf relativ hohem Temperaturniveau als auch Nutzkälte erzeugt und außerdem auch Energie effektiv gespeichert werden kann, läßt sich dieser Veröffentlichung jedoch nicht entnehmen.

Aus der DE-C- 596 308 (Normelli) ist eine absatzweise (diskontinuierlich) arbeitende Absorptions-Kältemaschine bekannt, bei der das Arbeitsmittel ausgetrieben, kondensiert und gespeichert wird, wenn billige Energie, z. B. Nachtstrom zur Verfügung steht, und zu einem späteren Zeitpunkt, wenn Kälte benötigt wird, das gespeicherte Arbeitsmittel zur Kälteerzeugung verdampft und wieder absorbiert wird. Die Kondensations- und Absorptionswärme sollen ebenfalls genutzt werden. Eine praktische Verwertung scheiterte jedoch bisher an geeigneten Absorptionsmittel/Arbeitsmittelsystemen, und es war aus den Veröffentlichungen von Tschernev auch nicht zu erkennen, daß sich das dort für die Verwertung von Niedertemperaturwärme angegebene Zeolith auch für eine mit ganz anderen Betriebsparametern arbeitende Einrichtung zum relativ langfristigen Speichern

2

großer Wärmemengen und zur Erzeugung von Nutzwärme relativ hoher Temperatur eignet.

Aus der US-A-2 003 310 ist eine Absorptions-Kältemaschine für die Erzeugung außergewöhnlich tiefer Temperaturen bekannt, bei der als Absorptionsmittel eine Zinkchloridschmelze und als Arbeitsmittel Ammoniak verwendet werden.

Aus der US-A-4 121 432 ist eine mit Sonnenenergie betriebene Absorptions-Kühl- oder Klimaanlage bekannt, die zwar Zeolith als Absorptionsmittel enthalten kann, jedoch weder eine Speicherfunktion auszuüben noch Nutzwärme hoher Temperatur zu liefern vermag, was auch gar nicht beabsichtigt ist.

Aus der FR-A-2 377 589 bzw. der entsprechenden DE-A-2 801 895, von denen die Erfindung ausgeht, ist eine Absorptions-Wärmepumpe bekannt, die Zeolith als Absorptionsmittel in Kombination mit Kohlenwasserstoffen als Arbeitsmittel enthalten kann. Ein intermittierender Speicherbetrieb ist hier jedoch nicht vorgesehen.

Schließlich sind auch mehrstufige Absorptions-Wärmepumpenanlagen bekannt. Die verschiedenen Stufen arbeiten meist kontinuierlich. Die Temperatur der der ersten Stufe zugeführten Betriebswärme war bisher auf Werte unter 180°C beschränkt, da Arbeitsmittelsysteme für höhere Temperaturen bisher nicht zur Verfügung standen.

Der vorliegenden Erfindung liegt dementsprechend die Aufgabe zugrunde, eine Absorptionswärmepumpenanlage der eingangs genannten Art dahingehend weiterzubilden, daß sie eine Speicherung größerer Wärmemengen über praktisch beliebige Zeiten und eine Erzeugung von Nutzwärme relativ hoher Temperatur ermöglicht.

Diese Aufgabe wird bei einer Absorptionswärmepumpenanlage der eingangs genannten Art erfindungsgemäß dadurch gelöst, daß mit der Kondensatoranordnung ein Vorratsbehälter zum Speichern des kondensierten Arbeitsmittels gekoppelt ist, daß die Austreiber- Absorber-Einheit den Zeolith als Absorptionsmittel und Wasser als Arbeitsmittel enthält und daß die Heizvorrichtung der Austreiber-Absorber-Einheit für ein Austreiben des Arbeitsmittels aus dem Zeolith bei Temperaturen bis mindestens 200°C ausgebildet ist.

Bei einer vorteilhaften Ausgestaltung dieser Absorptionswärmepumpenanlage ist die Heizvorrichtung für ein Austreiben bei Temperaturen bis über 250°C ausgebildet.

Das Absorptionsmittel kann zusätzlich zum Zeolith noch CaO oder $Mg_xCa_{1-x}O$ (x bis ca. 0,5) enthalten.

Die Vorrichtung zur Entnahme von Wärme aus der Austreiber-Absorber-Einheit ist bei einer bevorzugten Ausführungsform der Erfindung über einen Wärmeträgerkreislauf und/oder die Kondensatoranordnung mit einem Austreiber eines zusätzlichen Absorptionswärmepumpenkreises gekoppelt. Der zusätzliche Absorptionswärmepumpenkreis kann mit dem Arbeitsmittelsystem $LiBr/H_2O$, $LiBr/CH_3OH$ oder $NH_3/H_2O$ arbeiten.

Bei der Ausführungsform mit dem zusätzlichen Absorptionswärmepumpenkreis ist vorzugsweise eine Anordnung zum Entnehmen von Wärme aus einem Kondensator und/oder einem Absorber des zusätzlichen Absorptionswärmepumpenkreises und Einspeisen mindestens eines Teiles der entnommenen Wärme in den ersterwähnten Verdampfer vorgesehen.

Durch die Fähigkeit der vorliegenden Absorptions-Wärmepumpenanlage, größere Wärmemengen sicher speichern zu können ergeben sich ganz beträchtliche Vorteile: Die Heizvorrichtung, die die zu speichernde Wärme liefert, kann unter optimalen Betriebsbedingungen betrieben werden. Bei Verwendung einer Elektroheizung für die Speicherung von Wärme in der als Wärmespeicher dienenden Austreiber - Absorber - Einheit kann Nachtstrom .und Überschußstrom in Niedriglastzeiten verwendet werden. In der als Wärmespeicher dienenden Austreiber - Absorber - Einheit kann auch die Abwärme eines Motors, einer Turbine oder eines industriellen Prozesses gespeichert werden. Bei Heizung der als Speicher dienenden Austreiber - Absorber - Einheit mit einer Feuerung kann diese optimal und mit relativ langen Heizperioden betrieben werden, anschließend kann der Speicher thermisch abgeschlossen werden, so daß keine Kaminverluste auftreten.

Eine Regelung auf der Heizungsseite ist nicht erforderlich, man kann vielmehr die Absorptions-Wärmepumpe regeln, indem man die gespeicherte Energie nach Bedarf und in der jeweils erforderlichen Menge freisetzt

Die Absoptionswärmepumpenanlage gemäß der Erfindung ist ungefährlich, umweltfreundlich und arbeitet mit ungiftigen sowie nicht korrosiven Stoffen.

Gegenüber der Speicherung von Wärme und/oder Kälte, die von einer mit Nachtstrom betriebenen Wärmepumpe abgegeben wird, ergibt sich außerdem der Vorteil, daß man trotz der Verwendung von Nachtstrom die Wärmepumpe bei Tage, wo im allgemeinen der Hauptteil der Wärme und/oder Kälte benötigt wird, betreiben kann. Bei Tage steht außerdem im allgemeinen die für den Verdampfer benötigte Wärme auf einem höheren Temperaturniveau als bei Nacht zur Verfügung, so daß die Nutzwärme bei einem höheren Temperaturniveau erzeugt werden und/oder die Wärmepumpe mit einem höheren Wirkungsgrad betrieben werden kann.

Der Begriff "Absorptions-Wärmepumpe" soll auch Resorptions-Wärmepumpen umfassen, in diesem Falle entsprechen dann Verdampfung und Kondensation des Arbeitsmittels einer Desorption bzw. Resorption.

Im folgenden wird der Erfindungsgedanke anhand von Ausführungsbeispielen unter Bezugnahme auf die Zeichnung näher erläutert:

Es zeigen:

Figur 1 eine schematische Darstellung einer bevorzugten Absorptions-Wärmepumpenanlage gemäß einer Ausführungsform der Erfindung,

Figur 2 eine schematische Darstellung einer unterteilten Wärmespeichereinheit für eine Anlage des erläuterten Typs;

Figur 3 eine vorteilhafte Ausgestaltung eines Wärmetauschers für eine Anlage gemäß Fig. 2;

Figur 4 eine schematische Darstellung einer weiteren Ausführungsform der Erfindung, die zwei hintereinandergeschaltete Absorptions-Wärmepumpen, die beide diskontinuierlich arbeiten, enthält, und

Figur 5 eine konstruktiv einfachere bevorzugte Version einer Anlage des in Fig.4 dargestellten Typs.

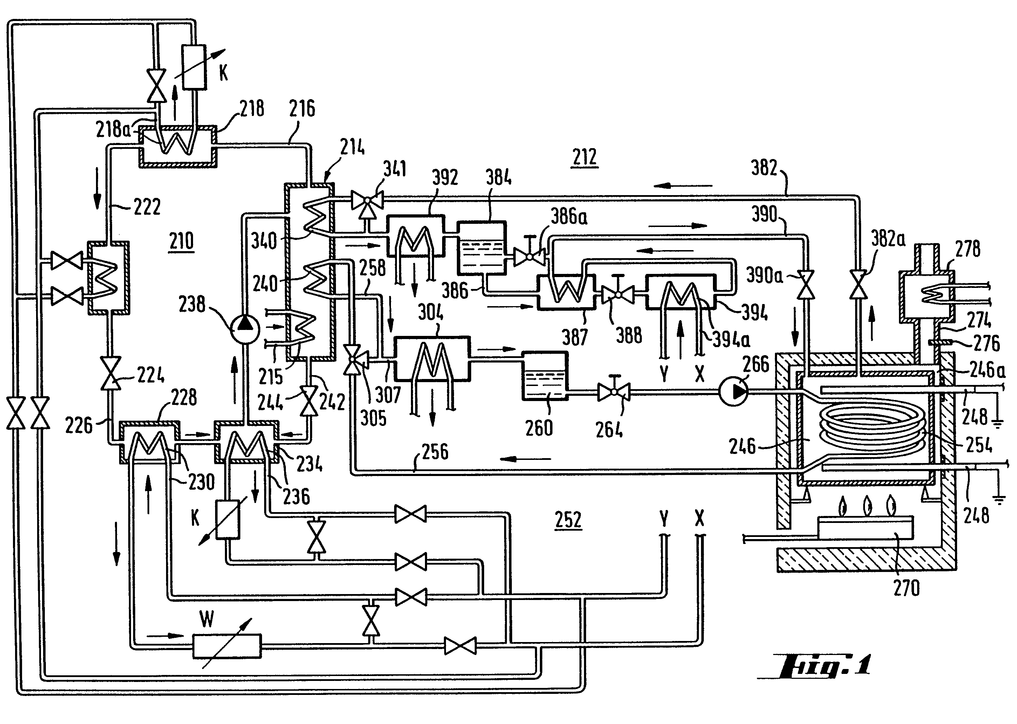

Die in Fig. 1 dargestellte Anlage, die zum Heizen und/oder Kühlen verwendet werden kann, enthält eine als Ganzes mit 210 bezeichnete Absorptions-Wärmepumpe sowie eine als Ganzes mit 212 bezeichnete Heizvorrichtung für einen Austreiber 214 der Wärmepumpe 210. Der Austreiber 214 enthält in bekannter Weise ein Absorptionsmittel, das ein Arbeitsmittel zu absorbieren vermag, welches durch Erhitzen wieder aus dem Absorptionsmittel ausgetrieben werden kann.

Der Austreiber 214 hat einen Auslaß für gasförmiges Arbeitsmittel, der über eine Leitung 216 mit einem Kondensator 218 verbunden ist, der als Wärmetauscher arbeitet und einen Wärmeausgang 218a hat. In einer zum Heizen dienenden Anlage wird hier Nutzwärme entnommen, bei einer nur zum Kühlen dienenden Anlage Abwärme abgeführt.

Vom Kondensator 218 wird verflüssigtes Arbeitsmittel über eine Leitung 222, ein Drosselorgan 224 und eine Leitung 226 in einen Verdampfer 228 geleitet, der als Wärmetauscher arbeitet und einen Wärmeeingang 230, über den die zur Verdampfung des verflüssigten und entspannten Arbeitsmittels erforderliche Wärmeenergie zuführbar ist, hat. Bei Verwendung der Anlage zum Kühlen nimmt der Wärmeeingang 230 die abzuführende Wärme auf. Das verdampfte Arbeitsmittel wird über eine Leitung einem Absorber 234 zugeführt, in dem der Arbeitsmitteldampf vom Absorptionsmittel absorbiert wird. Die dabei frei werdende Absorptionswärme tritt an einem Nutz- oder Abwärmeausgang 236 des Absorbers auf.

Das mit Arbeitsmittel beladene Absorptionsmittel wird über eine Pumpe 238 in den Austreibe 214 transportiert. Der Austreiber 214 hat einen Wärmeeingangsteil, der eine Heizrohrschlange 240 enthält. Durch die zugeführte Wärme wird das Arbeitsmittel wieder aus dem Absorptionsmittel ausgetrieben und das von Arbeitsmittel im wesentlichen freie Absorptionsmittel wird über eine Absorptionsmittel-Ausgangsleitung 242 und ein Drosselorgan 244 in den Absorber 234 eingeleitet.

Die Absorptions-Wärmepumpe 210 arbeitet kontinuierlich und enthält noch weitere, übliche Bauelemente, die zur Vereinfachung der Zeichnung nicht dargestellt sind, z. B. Wärmetauscher zwischen reicher und armer Absorptionsmittellösung bzw. zwischen flüssigem und gasformigem Arbeitsmittel. Es kann jedoch auch eine diskontinuierlich arbeitende Wärmepumpe verwendet werden,

Die Heizvorrichtung 212 für den Austreiber 214 der Wärmepumpe 210 ist bei der Anlage gemäß Fig.1 als der Wärmepumpe 210 vorgeschaltete Wärmepumpe ausgebildet und enthält einen Sorptions-Wärmespeicher 246, der mit Zeolith als Absorptionsmittel und Wasser als Arbeitsmittel arbeitet.

Der Wärmespeicher 246 hat ein dichtes Gehäuse 246a (das aus Gehäusemodulen bestehen kann), in dem sich das Absorptionsmittel (nicht dargestellt) befindet. Das Gehäuse ist schematisch als Kasten dargestellt, in der Praxis wird es im allgemeinen in bekannter Weise aus mehreren Modulen aufgebaut sein.

Das Gehäuse 246a ist mit einer Arbeitsmitteldampf-Ausgangsleitung 382 verbunden, die ein Absperrventil 382a enthält und zu einer Heizschlange 340 im Austreiber 214 der Absorptions-Wärmepumpe 210 führt. Der Ausgang der Heizschlange 340 ist mit einem Arbeitsmittel-Vorratsgefäß 384 verbunden, das bei dem verwendeten Arbeitsmittel H₂O also flüssiges Wasser enthalten wird. Das Vorratsgefäß 384 hat eine Auslaßleitung 386, die mit einem Verdampfer 394 über einen fakultativen Flüssigkeits/Gas-Wärmetauscher 387, der bei hoher Arbeitsmitteldampfdichte im Verdampfer 394 von Vorteil ist, mit einem Drosselorgan 388 verbunden ist, das aus einem Absperr- und Regelventil besteht und mit seiner Niederdruckseite über den Verdampfer 394 und die Gas-Seite des Wärmetauschers 387 mit einer Arbeitsmittel-Einlaßleitung 390 des Sorptionsspeichers 246 verbunden ist, welche ein Absperrventil 390a enthält. Zwischen Auslaßseite der Heizschlange 340 und dem Einlaß des Vorratsgefäßes 384 kann vorteilhaft noch ein Wärmetauscher 392 vorgesehen sein, dem Nutzwärme entnehmbar ist.

Im Wärmespeicher 246 ist ferner eine Rohrschlange 254 angeordnet, die zur Abführung der Wärmeenergie dient, welche im Wärmespeicher 246 als spezifische Wärme gespeichert ist und welche beim Einleiten des Arbeitsmittels als Sorptionswärme frei wird. Die Rohrschlange 254 ist in einen Wärmeträger-Kreislauf 252 geschaltet, der z. B. mit Wasser als Wärmeträger arbeiten kann und eine mit der Auslaßseite der Rohrslange 254 verbundene Auslaßleitung enthält, welche zu der im Austreiber 214 angeordneten Heizschlange 240 führt. Die Auslaßseite der Heizschlange 240 ist über eine Auslaßleitung 258, die einen Wärmetauscher 304 enthält, mit dem Einlaß eines Wärmeträger-Vorratsgefäßes 260 verbunden, dessen Auslaß über ein Regelventil 264 (oder eine regelbare Pumpe 266 mit dem Einlaßende der Rohrschlange 254 verbunden ist.

Die Heizungsanlage gemäß Fig. 1 arbeitet folgendermaßen:

Im Wärmespeicher 246 wird mittels einer elektrischen Heizvorrichtung 248 und/oder einem Brenner 270 und/oder durch Zuführung von Heizluft, heißen Abgasen und dergleichen Wärmeenergie gespeichert. Dabei wird das Arbeitsmittel aus dem Absorptionsmittel im Wärmespeicher 246 ausgetrieben und Desorptionswärme sowie spezifische Wärme im Absorptionsmittel gespeichert. Während des Austreibens ist das Ventil 382a geöffnet und das Ventil 390a geschlossen. Der Arbeitsmitteldampf durchströmt die Heizschlange 340, wo er kondensiert und Wärme an den Austreiber 214 der Absorptions-Wärmepumpe 210 abgibt. Das verflüssigte Arbeitsmittel (Wasser) wird im Vorratsgefäß 384 gespeichert. Das Regelventil 388 wird im allgemeinen während des Aufladens des Wärmespeichers 246 geschlossen sein. Wenn keine Betriebswärme für die Wärmepumpe 210 benötigt wird, kann dem Arbeitsmittel durch den Wärmeaustauscher 392 Wärme entzogen werden, z. B. zum Heizen oder zur Warmwasserbereitung.

Wenn später Wärme für den Austreiber 214 der Wärmepumpe 210 und/oder Kälte am Eingang 394a des Verdampfers 394 benötigt werden, läßt man durch das als Absperr- und Regelventil ausgebildete Drosselorgan 388 geregelt Arbeitsmittel in den Sorptions-Wärmespeicher 246 strömen. Das Ventil 382a ist nun geschlossen und das Ventil 390a geöffnet. Das Arbeitsmittel wird dann vom Absorptionsmittel absorbiert, wobei Sorptionswärme frei wird, welche durch den Wärmeträger-Kreislauf 252 zur Heizschlange 240 im Austreiber 214 transportiert wird und die Wärmepumpe 210 nun mit Betriebsenergie versorgt.

Die Heizschlangen 340 und 240 geben bei der oben beschriebenen Betriebsart also beide zeitlich verschoben Wärmeenergie an den Austreiber 214 ab.

Wenn der Wärmespeicher 246 so weit entladen ist, daß die Temperatur des Wärmeträgers im Wärmeträger-Kreislauf 252 nicht mehr für die Beheizung des Austreibers 214 ausreicht, kann die Restwärme aus dem Wärmespeicher über den Wärmetauscher 304 entnommen werden.

Es war bereits erwähnt worden, daß die Wärmeeingangsseite des Verdampfers 394 zu Kühlzwecken verwendet werden kann. Steht jedoch Wärme auf höherem Niveau, z. B. Abluftwärme oder dergleichen zur Verfügung, so kann die Wärmeeingangsseite des Verdampfers 394 mit entsprechend hoher Temperatur beaufschlagt werden, was den Vorteil hat, daß sich das Temperaturniveau im Wärmespeicher 246 zu höheren Werten verschiebt und im Wärmeträger-Kreislauf 252 entsprechend höhere Temperaturen zur Verfügung stehen.

Die Heizvorrichtung 212 kann, wie oben bereits erwähnt wurde, auch als einfacher (ohne Wärmevermehrung arbeitender) Sorptionswärmespeicher betrieben werden. Dies hat den Vorteil, daß ein größerer Teil der Nutzwärme beim späteren Sorptionsbetrieb als Nutzwärme zur Verfügung steht. In diesem Falle wird dann die Heizschlange 340 durch 341 kurzgeschlossen und das Austreiben wird bei so niedrigen Drücken im Austreiber 246 durchgeführt, daß die Kondensation in 392 bei Umgebungstemperatur stattfindet. Der Sorptionsvorgang verläuft wie beschrieben und die dabei entstehende Nutzwärme wird über den Wärmeträger-Kreislauf 252 entnommen.

Die Anlage gemäß Fig. 1 läßt sich dadurch abwandeln, daß man die Heizschlange 240 durch einen Dreiwegehahn 305 kurzschließt oder überhaupt wegläßt und die Wärmeträger-Auslaßleitung 256 direkt mit dem Wärmetauscher 304 verbindet. In diesem Falle wird dann die Wärme bei Entladen des Wärmespeichers 246 über den Wärmetauscher 304 als Nutzwärme entnommen und z. B. zum Zubereiten von Speisen, zum Waschen, Spülen, Heizen und dergl. verwendet.

Wenn die im Wärmespeicher 246 gespeicherte Wärme nur zur Raumheizung verwendet werden soll, kann der Wärmeträgerkreislauf 252 durch ein Gebläse oder dergl. ersetzt werden, das Luft kontrolliert durch entsprechende Luftkanäle im Speicher 246 bläst.

Eine weitere Variante, die ebenfalls ihre speziellen Vorteile hat, besteht darin, die Heizschlange 340 wegzulassen oder durch ein Dreiwege-Ventil 341 kurzzuschließen. Die beim Beladen des Wärmespeichers 246 und bei der Füllung des Vorratsgefäßes 384 frei werdende Kondensationswärme wird in diesem Falle dann ausschließlich über den Wärmetauscher 392 entnommen und als Nutzwärme verwendet.

Unter bestimmten Voraussetzungen, z. B. wenn Wärme mit verhältnismäßig hoher Temperatur benötigt wird oder der Wirkungsgrad der Wärmepumpe 210 wegen sehr niedriger Außentemperatur für Heizzwecke schlecht ist, kann die bei verhältnismäßig hoher Temperatur entnommen werden.

Bei der Heizungsanlage gemäß Fig. 1 kann man im Prinzip den Wärmetauscher 387 weglassen. Durch den Verdampfer 394, dem minderwertige Wärme niedriger Temperatur zugeführt werden kann, arbeitet der Arbeitsmittelkreislauf in sehr vorteilhafter Weise ebenfalls als Wärmepumpe und die durch den Wärmeträger-Kreislauf 252 entnehmbare Wärme wird um die über den Verdampfer 394 zugeführte Wärmemenge vergrößert. Im Falle der Kühlung wird die Kühlleistung zusätzlich durch die vom Verdampfer 394 aufgenommene Wärme vermehrt. Der Wärmespeicher 246 arbeitet also in diesem Falle zusätzlich auch als Austreiber und als Absorber einer diskontinuierlich betriebenen Wärmepumpe, worunter ein Betrieb mit zeitlicher Verschiebung bzw. zeitlichem Abstand zwischen Austreibvorgang und Absorptionsvorgang verstanden werden soll.

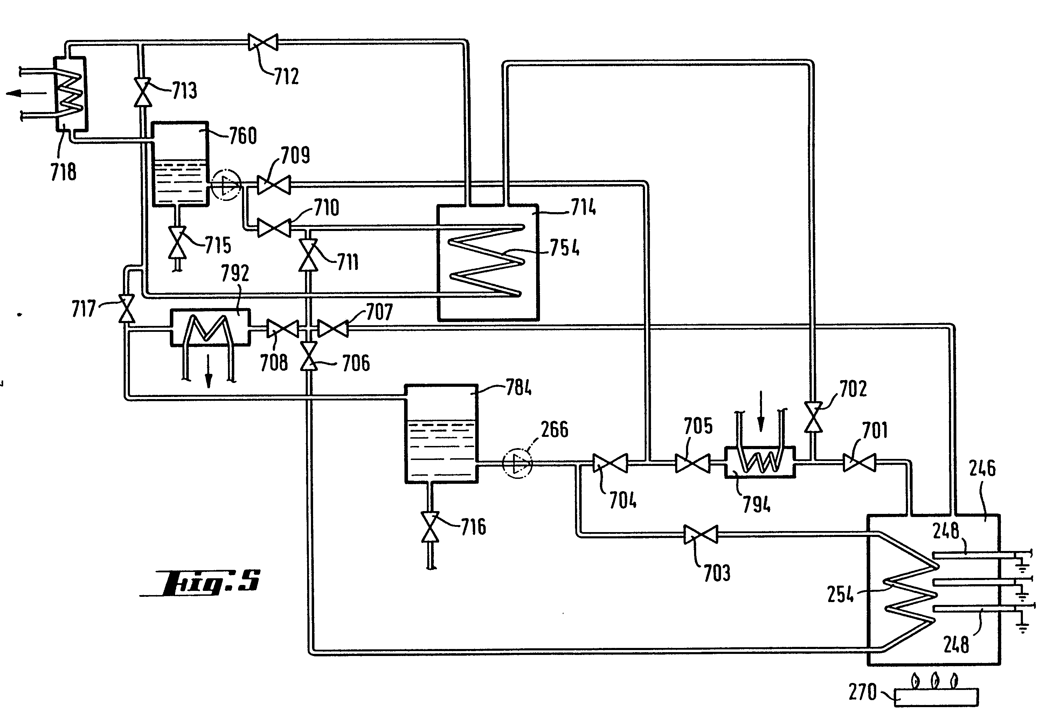

Es soll in diesem Zusammenhang bemerkt werden, daß die Konstruktion der Wärmepumpe 210 nicht auf einen speziellen Typ beschränkt ist. Man kann für diese Wärmepumpen sowohl kontinuierlich arbeitende Typen (wie beschrieben) verwenden, als auch Typen, die diskontinuierlich im oben definierten Sinne arbeiten. Bei einer diskontinuierlich arbeitenden Absorptions-Wärmepumpe können bekanntlich verschiedene Bestandteile, die oben einzeln erwähnt wurden, funktionsmäßig vereinigt sein, z. B. Austreiber und Absorber und/oder Verdampfer und Kondensator, was noch weiter unten anhand der Figuren 4 und 5 erläutert werden soll.

Es ist oben bereits erwähnt worden, daß die den Austreiber 214 mit Wärmeenergie versorgende Heizvorrichtung 212 bezüglich des den Sorptionsspeicher 246 enthaltenden Arbeitsmittelkreislaufes 382-392-384-388-394-390 als diskontinuierlich betriebene Wärmepumpe arbeitet. Da man im Wärmespeicher 246, der alternativ als Austreiber und Absorber betrieben wird, Zeolith als Absorptionsmittel verwendet, ergibt sich ein Wärmepumpensystem, das auch für sich alleine, also auch ohne nachgeschaltete Wärmepumpe 210, mit großem Vorteil betrieben werden kann, da es in der Lage ist, Nutzwärme bei Temperaturen in der Größenordnung von 100°C und darüber zu liefern. Dies ist mit den bekannten Absorptionsmittel/Arbeitsmittel-Systemen nicht möglich. Mit dem System $NH_3/H_2O$ kann die Nutzwärme mit maximal 60°C erzeugt werden und dann beträgt der Druck des Arbeitsmittels beim Austreiben schon 30 bar. Das System $LiBr/H_2O$ erlaubt zwar

höhere Nutzwärmetemperaturen, die Korrosionsprobleme werden dann jedoch erheblich und infolge der zunehmenden Zersetzung des Lithiumbromids wird schon bei Austreibertemperaturen von etwa 150°C eine Grenze erreicht. Mit der Zeolith als Absorptionsmittel enthaltenden Wärmepumpe läßt sich dagegen Wärme höherer Temperatur, z. B. im Temperaturbereich von 150 bis 300°C und darüber zum Erzeugen einer größeren Wärmemenge bei Temperaturen um 100°C benutzen. Die Wärmevermehrung beruht auf dem "Hochpumpen" der dem Verdampfer 394 zugeführten minderwertigen Niedertemperaturwärme, die z. B. der Umgebungsluft, dem Grundwasser, einem "Energiedach" oder dergl. entnommen werden kann.

Wenn man das System 212 ohne nachgeschaltete Wärmepumpe 210 benutzt, entfallen die Heizschlangen 240 und 340 und die Nutzwärme wird dem Kondensator 392 sowie dem Wärmeträger-Kreislauf 252 entnommen.

Mit der die Heizvorrichtung 212 und die nachgeschaltete Wärmepumpe 210 enthaltende Anlage gemäß Fig. 1 lassen sich sehr hohe Wirkungsgrade erreichen. Sowohl für die als Wärmepumpe arbeitende Heizvorrichtung 212 als auch für die nachgeschaltete Wärmepumpe 210 beträgt die theoretische Leistungsziffer (aufgewendete Hochtemperaturwärme zugewonnener Niedertemperatur-Nutzwärme) jeweils 2,0. In der Praxis kann für die Heizvorrichtung mit einer Leistungsziffer von 1,4 und für die Wärmepumpe 210 mit einer Leistungsziffer von 1,5 gerechnet werden, was einen Gesamtwirkungsgrad von 2,1 ergibt. Rechnet man bei dem Brenner 270 mit einem Wirkungsgrad von 0,8, was sich mit modernen Öl- oder Gasbrennern erreichen läßt, so erhält man eine Gesamtleistungsziffer von 1,7 für die eingesetzte Primärenergie. Die Leistungsziffer der besten bekannten Absorptions-Wärmepumpenanlagen beträgt nur etwa 1,2.

Da der Zeolith mit $H_2O$ als Arbeitsmittel betrieben wird, besteht die Gefahr, daß das Arbeitsmittel (Wasser) bei niedrigen Außentemperaturen im Verdampfer 394 gefriert. Dies kann man durch folgende Maßnahmen verhindern:

Erstens kann man dem Wasser im Verdampfer 394 ein Gefrierschutzmittel zusetzen, z. B. Ethylenglykol. Zweitens kann der Verdampfer 394 durch ein Ventil überbrückt werden, so daß bei geöffnetem Ventil 386a flüssiges Wasser durch die Leitung 390 in den Speicher 246 eingeführt wird.

Bezüglich des Betriebes der in Fig. 1 dargestellten Anlage ist ferner folgendes zu bemerken:

a) Man kann Wärme aus dem Kondensator 218 und/oder aus dem Absorber 234 entnehmen und dem Verdampfer 394 zuführen. Bei dieser Betriebsvariante läßt man das Wärmeträgermedium aus 218a oder 236 zuerst durch 394a strömen bevor es einem Wärmeverbraucher oder Kühlturm K zugeführt wird. Man erzielt dabei eine hohe Temperatur im Verdampfer 394. Zu diesem Zweck wird der Wärmetauscher 394a über die Leitungen X, Y mit den Wärmetauschern 236 und 218a verbunden. Die theoretische Leistungsziffer der Gesamtanlage ist dann immer noch 3,0, die praktische Leistungsziffer beträgt etwa 1,7 und für die Ausnutzung der Primärenergie ergibt sich dann unter Einbeziehung des Brennerwirkungsgrades immer noch eine Leistungsziffer von 1,36.

b) Der Wirkungsgrad der Wärmepumpe 210 kann dadurch verbessert werden, daß man den Verdampfer 394 dazu benutzt,

1. das flüssige Arbeitsmittel vor dem Drosselventil 224 weiter zu kühlen,

2. das Wärmeträgermedium, das 236 durchfließt, vor dem Eintritt in den Absorber 234 zu kühlen und/oder das Wärmeträgermedium, das 218a durchfließt, vor dem Eintritt in den Kondensator 218 zu kühlen. In diesem Fall durchfließt das Wärmeträgermedium in 218a bzw. 236 zuerst den Wärmeverbraucher oder Kühlturm K und dann erst den Verdampfer 394. Das dadurch bewirkte Absenken der Eintrittstemperatur in den Kondensator 218 bzw. Absorber 234 eintretenden Wärmeträgers erhöht die Ausgasungsbreite des Absorptionsmittels in der Wärmepumpe 210.

c) Eine weitere Betriebsvariante beim Heizen besteht darin, den Sorptionsspescher 246 mit dem Verdampfer 394 zugeführter Umgebungswärme, deren Temperatur z. B. 5°C betragen kann, so weit zu entladen, bis die Temperatur der Heizschlange 240 für das Austreiben des Arbeitsmittels im Austreiber 214 nicht mehr ausreicht; bei dieser Betriebsart ist, wie erwähnt, der theoretische Wirkungsgrad des Systems 210-212 gleich 4,0. Dann wird der Wärmeträger-Kreislauf, der den Verdampfer 394 mit Eingangswärme versorgt, auf den Kondensator 218 und/oder den Absorber 234 als Wärmequelle umgeschaltet, wobei sich immer noch ein theoretischer Wirkungsgrad von 3,0 ergibt. Durch diese Maßnahme steigt der Dampfdruck des Arbeitsmittels im Sorptionsspeicher 246 und damit die Temperatur, der Speicher kann auf diese Weise über den Wärmeträgerkreislauf 252 weiter entladen werden, so daß der Austreiber 214 über die Heizschlange 240 wieder Betriebsenergie genügend hoher Temperatur erhält.

Die obigen Ausführungen bezogen sich vorwiegend auf den Heizbetrieb. Im Kühlbetrieb kann folgendermaßen verfahren werden:

Der Speicher 246 wird mit Energie beladen, wobei Arbeitsmittel ausgetrieben und dem Austreiber 214 der Wärmepumpe 210 über die Heizschlange 340 Betriebsenergie zugeführt wird, so daß am Verdampfer 230 Kälteleistung zur Verfügung steht, die einem Kälteverbraucher W zugeführt wird. (Bei anderen Betriebsarten kann W die Umgebung bedeuten).

Beim Entladen des Speichers steht Kälteleistung sowohl am Verdampfer 230 als auch am Verdampfer 394 zur Verfügung. Der theoretische Wirkungsgrad der Kombination 210-212 beträgt 3, d.h. eine Einheit Eingangswärme an dem abwechselnd als Austreiber und Absorber arbeitenden Sorptionsspeicher 246 ergibt theoretisch drei Einheiten Kälte. Wenn die Wärmepumpe 210 einen Kältewirkungsgrad von 0,7 hat, was für eine Lithiumbromid-Wasser-Maschine ein reeller Wert ist, und der praktische Wirkungsgrad der die Eingangswärme in die Betriebswärme für die Wärmepumpe 210 umsetzenden Heizvorrichtung 212 gleich 1,4 ist, so erhält man einen Gesamtkältewirkungsgrad von $0,7 \cdot 1,4 + 0,4 = 1,38$. Der Summand 0,4 ist der Beitrag

6

des Verdampfers 394.

Die oben beschriebene Anlage hat also selbst bei Beheizung mit Elektrizität einen Wirkungsgrad, der etwa gleich dem bei Versorgung einer Kompressor-Kältemaschine ($\eta \cong 2,1$) mit Strom aus einem Pumpspeicherkraftwerk ($\eta \cong 0,65$) ist. Zusätzlich ergeben sich die für dezentralisierte Anlagen typischen Vorteile und eine Entlastung des Stromnetzes sowie der Elektrizitätserzeugungskapazität in den Spitzenlastzeiten.

Wenn mit zunehmender Entladung des Sorptionsspeichers 246 die Temperatur im Austreiber 214 schließlich nicht mehr ausreicht, um die Wärmepumpe 210 zu betreiben, kann die Kälteleistung nur noch am Verdampfer 394 erzeugt werden. Die Wärmepumpe 210 wird dann abgeschaltet und das Kühlfluid, das sonst durch den Kondensator 218 und/oder den absorber 234 fließt, wird nun durch den Wärmetauscher 304 geleitet, dadurch kann der Speicher 246 vollständig entladen werden und in 394 noch zusätzlich Kälteleistung erzeugt werden.

Es kann in technischer Hinsicht vorteilhaft sein, die Kälteleistung des Verdampfers 394 nicht direkt, sondern zur Verbesserung des Wirkungsgrades der nun als Kältemaschine arbeitenden Wärmepumpe 210 und 212 zu verwenden, indem man die Maßnahmen anwendet, die oben in Verbindung mit dem Heizbetrieb als Betriebsvariante a), b) und c) besprochen worden sind.

Es folgen Beispiele für die Betriebsparameter des Sorptionsspeichers 246; in allen Fällen ist die maximale Temperatur beim Austreiben so zu wählen, daß die Stabilitätsgrenze des verwendeten Zeoliths nicht überschritten wird.

**Beispiel**: Absorptionsmittel Zeolith; Arbeitsmittel $H_2O$

Der Sättigungsgrad $\zeta$ des Absorptionsmittels sei als das Verhältnis des Gewichts des sorbierten $H_2O$ zum Gewicht des Zeoliths im desorbierten Zustand definiert.

**A Absorberbetriebszyklus des Sorptionsspeichers 246:**

| Betriebsart | a | b | c | d |
|---|---|---|---|---|
| Verdampfer 394 | | | | |
| Arbeitstemperatur (°C) | 0 | 30 | 45 | 80° |
| Arbeitsdruck (bar) | 0,006 | 0,04 | 0,1 | 0,5° |

**Absorbertemperatur (°C)**

| für $\zeta$ | a | b | c | d |
|---|---|---|---|---|
| 0,05 | 180° | 220° | 240° | 280 |
| 0,10 | 125° | 170° | 190° | 240 |
| 0,20 | 80° | 120° | 140° | 180 |
| 0,25 | 40° | 65° | 80° | 130 |

Diese Betriebsart a) eignet sich für eine niedrige Eingangstemperatur am Verdampfer 394, z. B. zur Eiserzeugung oder Kühlung.

Die Betriebsarten b), c), d) und e) eignen sich für die Erzeugung hoher Ausgangstemperatur im Wärmeträgerkreislauf 252.

**B Austreiberbetriebszyklus des Sorptionsspeichers 246**

| Betriebsart: | a | b | c | d | e |
|---|---|---|---|---|---|
| Betriebsdruck (bar) | 0,5 | 1 | 2 | 5 | 10 |
| arbeitstemperatur (°C) des Kondensators 340: | 80 | 100 | 120 | 150 | 180 |
| Austreibertemperatur- | 130 | 150 | 170 | 190 | 210 |
| bereich (°C) für | bis | bis | bis | bis | bis |
| $0,25 > \zeta > 0,05$: | 280 | 320 | 350 | 370 | 400 |

Bei manchen Zeolithen darf nicht bis $\zeta = 0,05$ ausgetrieben werden, da sonst die Stabilitätsgrenze überschritten wird.

Dadurch, daß man dem Zeolith CaO und/oder $Mg_xCa_{1-x}O$ mit x bis ca. 0,3 zumischt, kann man bei gleichem Austreiberdruck und gleicher Kondensatortemperatur die Austreibertemperatur senken. x kann auch größere Werte haben, z. B. 0,5.

Es kann zweckmäßig sein, den Wärmespeicher zu unterteilen, um seine Wärmekapazität z. B. an saisonbedingte Schwankungen des Wärmebedarfs anzupassen. Im Sommer würde es z. B. relativ lange dauern, bis ein Wärmespeicher mit einer für den Winterbetrieb ausgelegten Wärmekapazität ganz entladen ist und der Speicher würde dann relativ lange in einem ungünstigen, niedrigen Temperaturbereich arbeiten.

Eine Unterteilung des Speichers ermöglicht ferner einen quasi-kontinuierlichen Betrieb durch zeitlich phasenverschobenes Arbeiten der Speicherteile, außerdem läßt sich der Wirkungsgrad der Anlage durch inneren Wärmetausch zwischen den Speicherteilen verbessern.

Fig. 2 zeigt beispielsweise einen Sorptionsspeicher des anhand von Fig.1 erläuterten Typs, der in zwei Hälften 246a und 246b unterteilt ist, und bei einer Anlage gemäß Fig. 1, 4 oder 5 verwendet werden kann. Zwischen den beiden Speicherhälften befindet sich eine Wärmeisolation 250. Für jede Speicherhälfte ist eine eigene elektrische Heizvorrichtung 248a bzw. 248b und/oder ein eigener Brenner 270a bzw. 270b vorgesehen. In jeder Speicherhälfte befindet sich eine Rohrschlange 254a bzw. 254b, die über Dreiwege-Ventile 400 wahlweise in den Wärmeträgerkreislauf 252 (Fig. 1) einschaltbar sind.

Jede Speicherhälfte hat ferner eine Arbeitsmittelauslaßleitung 382a bzw. 382b, die über ein Dreiwege-Ventil 402 wahlweise an die Leitung 382 (Fig. 1) anschließbar sind. In entsprechender Weise hat jede Speicherhälfte eine Arbeitsmitteleinlaßleitung 390a bzw. 390b, die über ein Dreiwege-Ventil 404 wahlweise an die Leitung 390 angeschlossen werden können.

Eine Heizungsanlage mit einem unterteilten Wärmespeicher, wie er in Fig. 2 dargestellt ist, läßt sich auf verschiedene Weise vorteilhaft betreiben:

In Zeiten geringen Wärmebedarfs, also z. B. im Sommer, kann man die Heizungsanlage mit nur einer Speicherhälfte betreiben. Es wird also jeweils nur die eine Hälfte, also z. B. die Hälfte 246a voll aufgeladen und entladen. Die Speicherverluste sind dann geringer als bei Verwendung des ganzen Speichers.

Man kann ferner bei einem Sorptionsspeicher die beiden Hälften alternierend als Austreiber und absorber betreiben, so daß dann ein quasi-kontinuierlicher Betrieb des Wärmepumpenteiles der Heizvorrichtung 212 (Fig. 1) möglich ist. Man kann dann also an den Heizschlangen 240 und 340 sowie an den Wärmetauschern 304 und 392 kontinuierlich Wärme entnehmen und am Verdampfer 394 kontinuierlich Kälte erzeugen.

Ein weiterer Vorteil der Unterteilung eines Sorptions-Wärmespeichers besteht darin, daß man die in der Austreiberphase entstehende Wärmeenergie durch Einleiten von ausgetriebenem Arbeitsmittel in den im Absorberbetrieb arbeitenden Speicherteil "umspeichern" kann.

Bei alternierendem Betrieb der beiden Speicherhälften kann man die aus den Rauchgasen gewonnene Abhitze vom Wärmetauscher 278 (Fig. 2) dem Verdampfer 394 (Fig. 1) zuführen. Hierdurch erhöht sich dann das Temperaturniveau während der Absorptionsphase, da sich ein höherer Arbeitsmitteldampfdruck einstellt.

Eine ähnliche Temperaturerhöhung ergibt sich auch, wenn man dem Verdampfer 394 Wärmeenergie hoher Temperatur aus Küchenabluft oder dergl. zuführt.

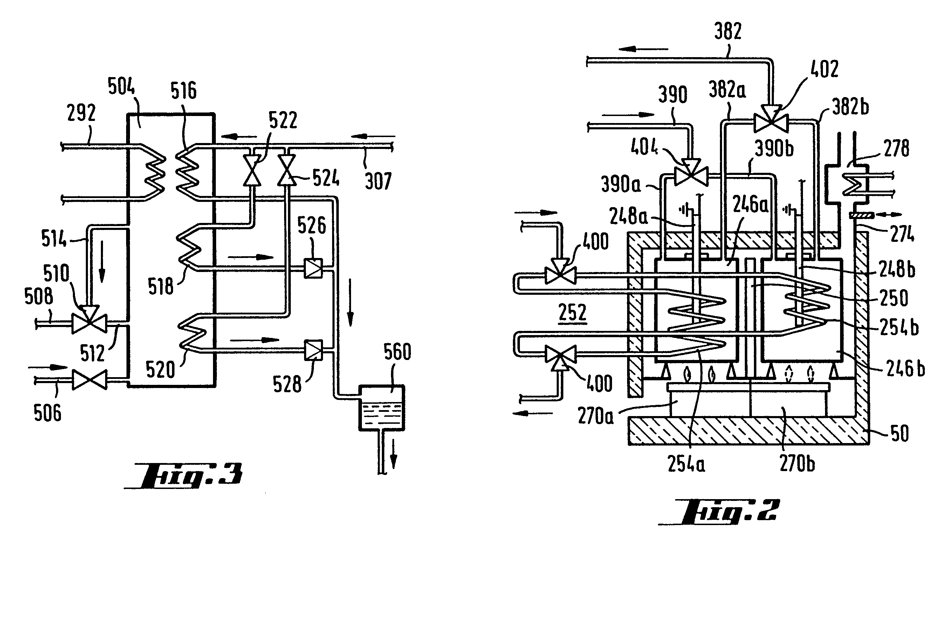

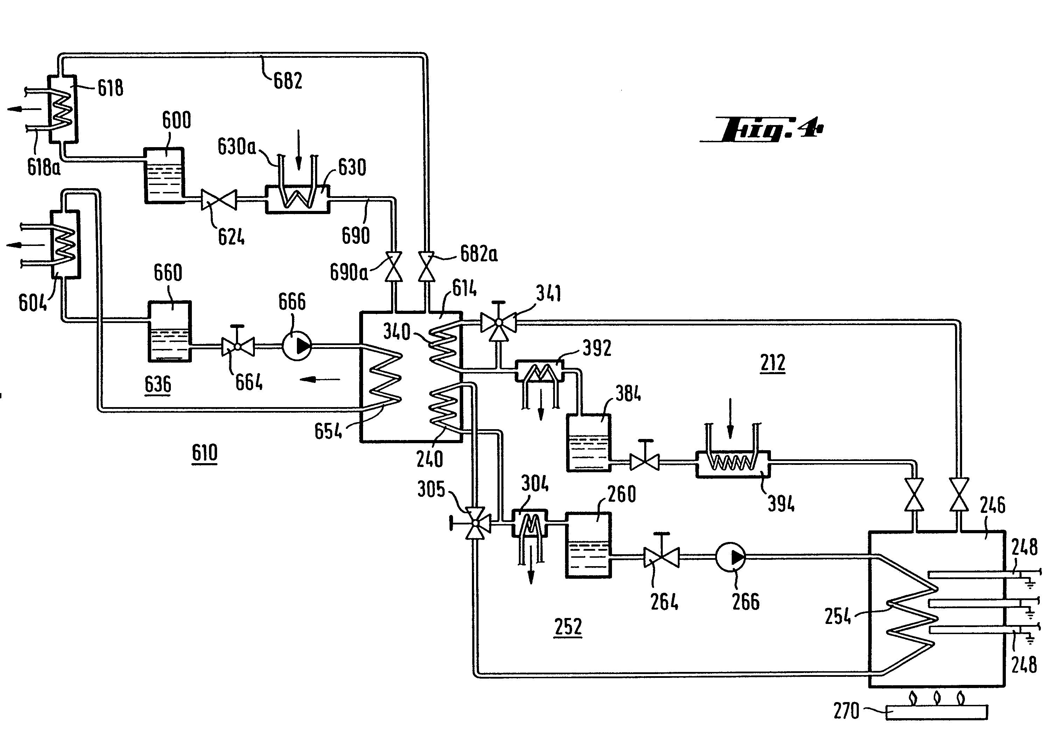

In Fig. 3 ist ein Wärmetauscher 504 dargestellt, der mit besonderem Vorteil anstelle des Wärmetauschers 304 (Fig. 1) verwendet werden kann. Die Temperatur des Wärmeträgers im Wärmeträgerkreislauf 252 (Fig. 1) ändert sich ja während des Absorptionsbetriebszyklus des Absorptions-Wärmespeichers 246 verhältnismäßig stark. Der Wärmetauscher 504 ist ein Warmwasserboiler, dem über eine Leitung 506 unten kaltes Wasser zugeführt und über eine Leitung 508 warmes Wasser entnommen werden kann. Die Leitung 508 ist über ein Dreiwege-Ventil 510 mit einem unteren sowie einem oberen Wasserentnahmeanschluß 512 bzw. 514 des Warmwasserboilers verbunden.

Der Warmwasserboiler enthält z. B. drei Heizschlangen 516, 518 und 520. Die Eingangsseite der Heizschlange 516 ist über eine Eingangsleitung 307 (siehe auch Fig. 1) mit dem Wärmeträgerkreislauf 252 verbunden. Die Eingangsseiten der Rohrschlange 518 und 520 können durch Ventile 522 bzw. 524 wahlweise mit der Eingangsleitung 307 verbunden werden.Die Ausgangsseite der Heizschlange 516 ist direkt mit dem Eingang des Wärmeträgerspeichers 560 verbunden, während die Ausgangsseiten der Heizschlangen 518 und 520 jeweils über ein Rückschlagventil 526 bzw. 528 mit dem Einlaß des Wärmeträgerspeichers 560 verbunden sind. Wenn zu Beginn des Absorptionszyklus die Temperatur des Wärmeträgers im Wärmeträgerkreislauf 252 noch verhältnismäßig hoch ist, wird der Wärmeträger nur durch die Heizschlange 516 geleitet, die Ventile 522 und 524 sind geschlossen. Mit absinkender Temperatur wird dann zuerst das Ventil 522 und schließlich das Ventil 524 geöffnet und damit die Temperatur des Wärmeträgers der Temperaturschichtung der Wassersäule im Warmwasserbereiter 504 angepaßt.

Fig. 4 zeigt eine Ausführungsform der Erfindung, welche eine Heizvorrichtung 212 der anhand von Fig. 1 beschriebenen Art enthält, der eine Wärmepumpe 610 nachgeschaltet ist, die diskontinuierlich im oben definierten Sinne arbeitet. Die Wärmepumpe 610 enthält einen durch die Heizvorrichtung 212 beheizten Austreiber 614, der zeitlich abwechselnd als Austreiber und Absorber arbeitet. Das während der Austreiberphase ausgetriebene Arbeitsmittel strömt durch eine ein Ventil 682a enthaltende Arbeitsmittel-Ausgangsleitung 682 zu einem Kondensator 618, dem Nutz- oder Abwärme über eine Wärmetauscherschlange 618a entnommen wird, und wird dort kondensiert. Das kondensierte, flüssige Arbeitsmittel fließt in ein Vorratsgefäß 600 (das funktionsmäßig dem Vorratsgefäß 384 entspricht). Aus dem Vorratsgefäß 600 wird das flüssige Arbeitsmittel durch ein als Entspannungsvorrichtung wirkendes Regelventil 624 geregelt einem Verdampfer 630 zugeführt, der eine Wärmetauscherschlange 630a enthält, und Wärme aufnimmt, so daß eine an die Wärmetauscherschlange 630a angeschlossene Einrichtung gekühlt werden kann. Das verdampfte Arbeitsmittel strömt dann vom Verdampfer 630 über eine Arbeitsmittel-Eingangsleitung 690, die ein Ventil 690a, insbesondere ein Rückschlagventil enthält, zurück zum Austreiber-Absorber 614. Der Austreiber-Absorber 614 enthält ferner eine Vorrichtung zur Entnahme der bei der Absorption des Arbeitsmittels frei werdenden Absorptionswärme. Diese Vorrichrichtung ist in Fig. 4 als Wärmeträgerkreislauf 636 dargestellt, der eine zur Entnahme der Sorptionswärme dienende, im Austreiber-Absorber 614 angeordnete Wärmetauscherschlange 654, einen Wärmetauscher 604 (z. B. einen Raumheizkörper oder dergl.) zur Nutzbarmachung oder Abführung der entnommenen Sorptionswärme, ein Wärmeträgervorrats- oder Ausgleichsgefäß 660, ein Regelventil 664 und, falls erforderlich, eine Umwälzpumpe 666 enthält. Der Austreiber-Absorber 614 kann jedoch auch so ausgebildet sein, daß ihm die bei der Absorption frei werdende Sorptionswärme direkt entnommen werden kann, z. B. durch Hindurchblasen von Luft durch ein ihn durchsetzendes Röhrensystem.

Der Austreiber-Absorber 614 arbeitet während einer ersten Zeitspanne (Austreibphase) als Austreiber. Dabei ist das Ventil 682a geöffnet und das Ventil 690a geschlossen. Das durch die Wärmezufuhr von der Heizvorrichtung 212 aus dem Absorptionsmittel ausgetriebene, gasförmige Arbeitsmittel strömt durch die Leitung 682 in den Kondensator 618, wo es unter Abgabe von Nutzwärme kondensiert und das kondensierte Arbeitsmittel wird dann im Vorratsgefäß 600 gesammelt. Das Regelventil 624 und das Ventil 690a werden während dieser Phase im allgemeinen geschlossen sein. Der Wärmeträgerkreislauf 636 ist während dieser Austreibphase außer Betrieb.

Anschließend oder zu irgendeinem beliebigen späteren Zeitpunkt wird dann der Austreiber-Absorber auf Absorberbetrieb umgeschaltet. Das Ventil 682a wird geschlossen, das Ventil 690a geöffnet und durch das Regelventil 624 wird entsprechend dem Wärme- und/oder Kältebedarf geregelt flüssiges Arbeitsmittel aus dem Vorratsgefäß 600 in den Verdampfer 630 eingespeist. Das verdampfende Arbeitsmittel nimmt Wärme auf, so daß eine an die Wärmetauscherschlange 630a angeschlossene Einrichtung gekühlt werden kann. Gleichtzeitig wird im Austreiber-Absorber 614 Absorptionswärme frei, die über den Wärmeträgerkreislauf 636 entnommen und z. B. zur Warmwasserbereitung nutzbar gemacht oder na die Umgebung abgeführt werden kann.

Für Fig. 4 eigenen sich z. B. die folgenden Absorptionsmittel-Arbeitsmittelsystem:

| Austreiber/Absorber-Absorptionsmittel | | Arbeitsmittel |
|---|---|---|
| 246 | Zeolith | $H_2O$ |
| 614 | Silicagel | |
| | aktiviertes Aluminiumoxid } | $H_2O$; $NH_3$; $CH_3OH$ |
| | Aktivkohle | $NH_3$; $CH_3OH$ |
| | Zeolith | $H_2O$; $NH_3$; $CH_3OH$ |

Der Wärmeträger im Kreislauf 252 kann z. B. Wasser (Dampf) oder Öl sein.

Es kann auch vorteilhaft sein, die Verdampfungswärme für den Verdampfer 394 nicht aus der Umgebung oder einem zu kühlenden System zu entnehmen, sondern aus dem Kondensator 618 und/oder dem Wärmetauscher 604.

Fig. 5 zeigt eine schematische Darstellung einer erfindungsgemäßen Anlage des anhand von Fig. 4 erläuterten Typs, die jedoch durch Vereinigung gewisser Baueinheiten und Zusammenschalten der Arbeitsmittelkreisläufe der als Heizvorrichtung dienenden Wärmepumpe und der nachgeschalteten Wärmepumpe weiter vereinfacht ist. In diesem Fall muß das Arbeitsmittel in den beiden Wärmepumpen-Kreisläufen sowie der Wärmeträger in den Wärmeträgerkreisläufen aus dem gleichen Stoff als $H_2O$ bestehen.

Die Anlage gemäß Fig. 5 enthält einen wechselweise als Austreiber und Absorber arbeitenden Sorptionsspeicher 246, der dem der Anlage gemäß Fig. 1 entspricht.

Die Anlage enthält ferner einen Absorber-Austreiber 714, der die Funktion des Austreiber-Absorbers 614 erfüllt und eine Heizschlange 754 enthält, die die Funktionen der Heiz- und Wärmetauscherschlangen 240, 340 und 654 der Anlage gemäß Fig. 4 erfüllt. Mit den Austreiber-Absorber-Wärmespeichern 246 und 714 arbeitet ein Verdampfer 794 zusammen, der die Funktion der Verdampfer 394 und 630 (Fig. 4) erfüllt. Er wird von einem Vorratsgefäß 760 gespeist, welches die Funktionen der Vorratsgefäße 600 und 384 in Fig. 4 erfüllt.

Mit dem Austreiber-Absorber 714 arbeitet ein Kondensator 718 zusammen, der die Funktionen des Wärmetauschers 604 und des Kondensators 618 erfüllt. Das in ihm kondensierte Arbeitsmittel fließt in ein Vorratsgefäß 760, das die Funktionen der Vorratsgefäße 600 und 660 sowie einen Teil der Funktion des Vorratsgefäßes 384 erfüllt. Die Funktionen der Wärmetauscherschlangen 240,340 und 654 werden durch eine einzige Wärmetauscherschlange 754 ausgeübt.

Ferner ist ein Wärmetauscher 792 vorgesehen, der die Funktionen der Wärmetauscher 392 und 304 erfüllt.

Die erwähnten Baueinheiten sind durch Leitungen miteinander verbunden, die Ventile 701 bis 713 und 717 enthalten, und in der aus Fig. 5 ersichtlichen Weise geschaltet sind. Die Steuerung dieser Ventile während der verschiedenen Betriebsphasen der Anlage gemäß Fig. 5 erfolgt gemäß der folgenden Tabelle, in der ein "o" den Betriebszustand "offen" und "-" den Betriebszustand "geschlossen" des betreffenden Ventils bedeutet.

TABELLE FÜR VENTILSSTELLUNGEN IN FIGUR 5

o = offen
- = geschlossen
Ventil Nr.

| Prozeßschritt | | 701 | 702 | 703 | 704 | 705 | 706 | 707 | 708 | 709 | 710 | 711 | 712 | 713 | 717 |
|---|---|---|---|---|---|---|---|---|---|---|---|---|---|---|---|
| 1) | Beladen (Energiezufuhr) | - | - | - | - | - | - | o | - | - | - | o | o | - | o |
| 2a) | Abkühlen von 246 durch Austreiben in 714 | - | - | o | - | - | o | - | - | - | - | o | o | - | o |
| 2b) | Anschließend Abkühlen von 714 | - | - | - | - | - | - | - | - | - | o | - | - | o | - |
| 2') | Abkühlen von 246 durch Brauchwassererzeugung in 792, gleichzeitig Abkühlung von 714 | - | - | - | - | - | - | o | o | - | o | - | - | o | - |
| 3) | 1. Kälteproduktion durch Sorption 714 | - | o | - | - | o | - | - | - | o | o | - | - | o | - |
| 4a) | 2. Kälteproduktion durch Sorption in 246 (Austreiben in 714) | o | - | o | - | o | o | - | - | o | - | o | o | - | o |
| 4b) | Fortsetzung der 2. Kälteproduktion unter Erzeugung von Brauchwasser in 792, Abkühlung von 714 | o | - | o | - | o | o | - | o | o | o | - | - | o | - |
| 5) | 3. Kälteproduktion durch Sorption in 714 | - | o | - | - | o | - | - | - | o | o | - | - | o | - |
| 6) | Wasserstandsausgleich zwischen 760 und 784 | - | - | - | o | - | - | - | - | o | - | - | - | - | - |

Die Ventile 715 und 716 dienen zum Reinigen der Vorratsbehälter 760 bzw. 784. Die Entnahme von Arbeitsmittel aus dem Vorratsbehälter 760 zur Sorption sowohl in 714 wie auch 246 ergibt einen besseren Wirkungsgrad im Verdampfer 794, weil das mittlere Temperaturniveau in 760 tiefer liegt als in 784.

Auch bei den Anlagen gemäß Fig. 4 und 5 können unterteilte Wärmespeicher 246 verwendet werden, wie es oben anhand der Fig. 2 erläutert worden war.

Die beschriebenen mit Zeolith als Absorptionsmittel arbeitenden Wärmepumpen lassen sich, insbesondere im quasi-kontinuierlichen Betrieb mit Doppelspeicher gemäß Fig. 2 entweder alleine oder mit nachgeschalteter Wärmepumpe 210 mit großem Vorteil zur Verwertung der Abwärme eines Otto- oder Dieselmotors verwenden. Hierbei wird die Wärme der Auspuffgase zum Austreiben und die Kühlwasser- oder Kühlluftwärme (Kühlfluidwärme) zur Beheizung des Verdampfers (z. B. 394 in Fig. 1) verwendet. Man erhält Nutzwärme, deren Temperatur über der der Kühlfluidtemperatur liegt, so daß die gesamte Abwärme des Motors auf einem höheren Temperaturniveau zur Verfügung steht. Diese Wärme kann entweder direkt zum Heizen oder über eine Absorptionswärmepumpe (z. B. 210 in Fig. 1) zum Heizen und/oder Kühlen verwendet werden, insbesondere, wenn der Motor seinerseits eine Kompressor-Wärmepumpe antreibt.

**Patentansprüche**

1. Absorptionswärmepumpenanlage mit

einer Austreiber-Absorber-Einheit (246), die Zeolith als Absorptionsmittel sowie ein in diesem absorbiertes Arbeitsmittel enthält und alternierend als Austreiber oder Absorber arbeitet,

einer Heizvorrichtung (248, 270) zum Zuführen von Wärmeenergie relativ hoher Temperatur zur Austreiber-Absorber-Einheit (246),

einer mit der Austreiber-Absorber-Einheit (246) gekoppelten Vorrichtung (254) zur Wärmeentnahme,

einer mit der Austreiber-Absorber-Einheit (246) gekoppelten Kondensatoranordnung (340, 392) zum Kondensieren von dampfförmigem Arbeitsmittel, das durch die Wärmezufuhr mit einem Druck in einem vorgegebenen Druckbereich aus dem Absorptionsmittel ausgetrieben wurde,

einer Vorrichtung (388) zum Verringern des Druckes des kondensierten Arbeitsmittels und

einem Verdampfer (394) zum Verdampfen des kondensierten Arbeitsmittels verringerten Druckes,

dadurch gekennzeichnet,

daß mit der Kondensatoranordnung (340, 392) ein Vorratsbehälter (384) zum Speichern des kondensierten Arbeitsmittels gekoppelt ist,

daß die Austreiber-Absorber-Einheit (246) den Zeolith als Absorptionsmittel und Wasser als Arbeitsmittel enthält und

daß die Heizvorrichtung (248, 270) der Austreiber-Absorber-Einheit (246) für ein Austreiben des Arbeitsmittels aus dem Zeolith bei Temperaturen bis mindestens 200°C ausgebildet ist.

2. Absorptionswärmepumpenanlage nach Anspruch 1, dadurch gekennzeichnet, daß die Heizvorrichtung (270) für ein Austreiben bei Temperaturen bis über 250°C ausgebildet ist.

3. Absorptionswärmepumpenanlage nach Anspruch 1 oder 2, dadurch gekennzeichnet, daß das Absorptionsmittel zusätzlich zum Zeolith noch CaO oder $Mg_xCa_{1-x}O$ (x bis ca. 0,5) enthält.

4. Absorptionswärmepumpenanlage nach Anspruch 1, 2 oder 3, dadurch gekennzeichnet, daß die Vorrichtung (254) zur Entnahme von Wärme aus der Austreiber-Absorber-Einheit (246) über einen Wärmeträgerkreislauf (256, 240, 266) und/oder die Kondensatoranordnung (340) mit einem Austreiber (214) eines zusätzlichen Absorptionswärmepumpenkreises (210) gekoppelt ist.

5. Absorptionswärmepumpenanlage nach Anspruch 4, dadurch gekennzeichnet, daß der zusätzliche Absorptionswärmepumpenkreis mit dem Arbeitsmittelsystem $LiBr/H_2O$, $LiBr/CH_3OH$ oder $NH_3/H_2O$ arbeitet.

6. Absorptionswärmepumpenanlage nach Anspruch 4 oder 5, gekennzeichnet durch eine Anordnung (218a, 236) zum Entnehmen von Wärme aus einem Kondensator (218) und/oder einem Absorber (234) des zusätzlichen Absorptionswärmepumpenkreises (210) und Einspeisen mindestens eines Teiles der entnommenen Wärme in den ersterwähnten Verdampfer (394).

7. Absorptionswärmepumpenanlage nach einem der vorhergehenden Ansprüche, dadurch gekennzeichnet, daß die Austreiber-Absorber-Einheit zwei Teile (246a, 246b) enthält, die alternierend als Austreiber und Absorber betrieben werden können.

## Claims

1. Absorption heat pump installation including a generator-absorber unit (246) which contains a zeolite as the absorption agent and a working agent absorbed therein and operates alternately as a generator or absorber,
a heating device (248, 270) for supplying thermal energy of relatively high temperature to the generator-absorber unit (246),
a device (254) coupled to the generator-absorber unit (246) for the removal of heat,
a condenser arrangement (340, 392) coupled to the generator-absorber unit (246) for condensing a vaporous working agent which has been generated from the absorption agent by the supply of heat with a pressure in a predetermined pressure range,
a device (388) for reducing the pressure of the condensed working agent and
a vaporiser (394) for vaporising the condensed working agent at reduced pressure,
characterised in that
a storage container (384) for storing the condensed working agent is coupled to the condenser arrangement (340, 392),
that the generator-absorber unit (246) contains the zeolite as the absorption agent and water as the working agent and
that the heating device (248, 270) of the generator-absorber unit (246) is constructed to generate the working agent from the zeolite at temperatures of at least 200°C.

2. Absorption heat pump installation as claimed in Claim 1, characterised in that the heating device (270) is constructed for generation at temperatures of above 250°C.

3. Absorption heat pump installation as claimed in Claim 1 or 2, characterised in that the absorption agent contains CaO or $Mg_xCa_{1-x}O$ (x up to about 0.5) in addition to the zeolite.

4. Absorption heat pump installation as claimed in Claim 1, 2 or 3, characterised in that the device (254) for removing heat from the generator-absorber unit (246) is coupled via a heat carrier circuit (256, 240, 266) and/or the condenser arrangement (340) to a generator (214) of an additional absorption heat pump circuit (210).

5. Absorption heat pump installation as claimed in Claim 4, characterised in that the additional absorption heat pump circuit operates with the working agent system $LiBr/H_2O$, $LiBr/CH_3OH$ or $NH_3/H_2O$.

6. Absorption heat pump installation as claimed in Claim 4 or 5, characterised by an arrangement (218a, 236) for removing heat from a condenser (218) and/or from an absorber (234) of the additional absorption heat pump circuit (210) and for feeding at least a part of the removed heat into the first mentioned vaporiser (394).

7. Absorption heat pump installation as claimed in one of the preceding claims, characterised in that the generator-absorber unit includes two portions (246a, 246b) which can be operated alternately as a generator and an absorber.

## Revendications

1. Installation de pompe à chaleur à absorption, comportant
un ensemble absorbeur-extracteur (246) qui contient de la zéolithe comme agent d'absorption, ainsi qu'un fluide de travail absorbé dans celle-ci, et qui fonctionne alternativement comme extracteur ou comme

**0 026 257**

absorbeur,

un dispositif de chauffage (248, 270) pour amener de l'énergie thermique à une température relativement éléve à l'ensemble absorbeur-extracteur (246),

un dispositif (254) pour prélever de la chaleur couplé à l'ensemble absorbeur-extracteur (246),

un ensemble de condenseurs (340, 392) couplé à l'ensemble absorbeur-extracteur (246) pour condenser le fluide de travail sous forme de vapeur, qui a été extrait de l'agent d'absorption par l'amenée de chaleur à une pression à l'intérieur d'une plage de pressions prédéterminée,

un dispositif (388) pour réduire la pression du fluide de travail condensé, et

un évaporateur (394) pour évaporer le fluide de travail à pression réduite,

caractérisée en ce que

on couple à l'ensemble de condenseurs (340, 392) un réservoir (384) pour stocker le fluide de travail condensé,

l'ensemble absorbeur-extracteur (246) contient la zéolithe comme agent d'absorption et de l'eau comme fluide de travail,

le dispositif de chauffage (248, 270) de l'ensemble absorbeur-extracteur (246) est réalise pour extraire le fluide de travail de la zéolithe à des températures pouvant atteindre au moins 200°C

2. Installation de pompe à chaleur à absorption selon la revendication 1, caractérisée en ce que le dispositif de chauffage (270) est réalisé pour des extractions à des températures pouvant dépasser 250°C.

3. Installation de pompe à chaleur selon la revendication 1 ou 2, caractérisée en ce que l'agent d'absorption contient, outre la zéolithe, CaO ou $Mg_xCa_{1-x}O$ (x jusqu'à environ 0,5).

4. Installation de pompe à chaleur selon la revendication 1, 2 ou 3, caractérisée en ce que le dispositif (254) est couplé, pour prélever de la chaleur de l'ensemble absorbeur-extracteur (246), à un extracteur (214) d'un circuit de pompe à chaleur à absorption supplémentaire (210) par l'intermédiaire d'un circuit caloporteur (256, 240, 266) et/ou de l'ensemble de condenseurs (340).

5. Installation de pompe à chaleur selon la revendication 4, caractérisée en ce que le circuit de pompe à chaleur à absorption supplémentaire travaille avec le système de fluide de travail $LiBr/H_2O$, $LiBr/CH_3OH$, ou $NH_3/H_2O$.

6. Installation de pompe à chaleur selon la revendication 4 ou 5, caractérisée par un agencement (218a, 236) pour prélever de la chaleur d'un condenseur (218) et/ou d'un absorbeur (234) du circuit de pompe à chaleur à absorption supplémentaire (210) et pour alimenter l'évaporateur mentionné ci-dessus (394) avec au moins une partie de la chaleur prélevée.

7. Installation de pompe à chaleur selon l'une des revendications précédentes, caractérisée en ce que l'ensemble absorbeur-extracteur comporte deux parties (246a, 246b) qu'on peut faire fonctionner alternativement comme extracteur et comme absorbeur.

12

Fig. 1

*Fig:3*

*Fig:2*

0 026 257

Fig. 4.

Fig. 5

0 026 257